(19) Europäisches Patentamt
European Patent Office
Office européen des brevets

(11) EP 1 193 290 A1

(12) **EUROPEAN PATENT APPLICATION**
published in accordance with Art. 158(3) EPC

(43) Date of publication:
**03.04.2002 Bulletin 2002/14**

(21) Application number: **00915473.3**

(22) Date of filing: **10.04.2000**

(51) Int Cl.7: **C08L 23/00**, C08L 101/00, C08K 9/04, C08J 3/20

(86) International application number:
**PCT/JP00/02337**

(87) International publication number:
**WO 00/61676 (19.10.2000 Gazette 2000/42)**

(84) Designated Contracting States:
**AT BE CH CY DE DK ES FI FR GB GR IE IT LI LU MC NL PT SE**

(30) Priority: **12.04.1999 JP 10438099**
**16.07.1999 JP 20310999**
**25.08.1999 JP 23843399**
**30.08.1999 JP 24380099**

(71) Applicant: **SEKISUI CHEMICAL CO., LTD.**
**Osaka-shi, Osaka 530-8565 (JP)**

(72) Inventors:
- **IWASA, Koichiro, c/o Sekisui Chemical Co., Ltd.**
  **Kyoto-shi, Kyoto 601-8105 (JP)**
- **UEDA, Naoki, c/o Sekisui Chemical Co., Ltd.**
  **Kyoto-shi, Kyoto 601-8105 (JP)**
- **SHIBAYAMA, Koichi,**
  **c/o Sekisui Chemical Co., Ltd.**
  **Mishima-gun, Osaka 618-8589 (JP)**
- **FUKATANI, Juichi,**
  **c/o Sekisui Chemical Co., Ltd.**
  **Mishima-gun, Osaka 618-8589 (JP)**

(74) Representative: **Merkle, Gebhard et al**
**TER MEER STEINMEISTER & PARTNER GbR,**
**Patentanwälte,**
**Mauerkircherstrasse 45**
**81679 München (DE)**

(54) **POLYOLEFIN RESIN COMPOSITE, THERMOPLASTIC RESIN COMPOSITE, AND PROCESS FOR PRODUCING THERMOPLASTIC RESIN COMPOSITE**

(57) A polyolefinic resin composite material is provided as a nanocomposite excellent in mechanical strength, thermal properties and gas barrier properties.

A polyolefinic resin composite material containing 100 parts by weight of a polyolefinic resin and 0.1 - 50 parts by weight of an organically-modified layered silicate, wherein the organically-modified layered silicate is derived via ion-exchange of metal ions originally present as exchangeable cations in a crystal structure of a layered silicate with a cationic surfactant, and wherein a hydroxyl group present on a crystal face of the organically-modified layered silicate is chemically modified by a chemical substance containing at its molecular end a functional group having a tendency to chemically couple to the hydroxyl group or a chemical affinity for the hydroxyl group.

FIG. 1

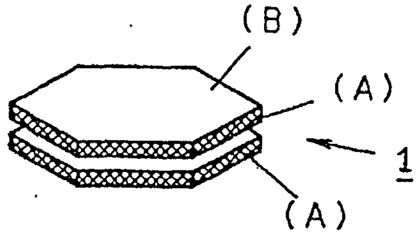


EP 1 193 290 A1

## Description

### TECHNICAL FIELD

The present invention relates to a polyolefinic resin composite material and thermoplastic resin composite material, called nanocomposites. More particularly, the present invention relates to a polyolefinic resin composite material containing a polyolefin resin and an organically-modified layered silicate, a thermoplastic resin composite material containing a thermoplastic resin and an organically-modified layered silicate, and a process for production of the thermoplastic resin composite material.

### BACKGROUND ART

A layered silicate is an inorganic mineral consisting of a number of minute flaky crystals held together by ionic bonding and having a thickness of about 1 nm and a mean aspect ratio (ratio of a length or width to a thickness) in the approximate range of 20 - 200. It is conventionally known that the mechanical, thermal and gas barrier properties of polymeric materials can be improved by disintegrating the aggregate structure by a chemical or physical means to thereby allow the flaky crystals to disperse uniformly throughout organic polymers. Such composite materials incorporating layered silicates in the form of flaky crystals dispersed in polymers are called nanocomposites.

For the nanocomposites, in order for the flaky crystals to be dispersed uniformly in organic polymers, the ionic interaction between flaky crystals must be reduced to a minimum level to thereby increase dispersibility.

For example, Japanese Patent Publication No. Hei 8-22946 discloses a technique wherein aminocarboxylic acid is first intercalated in a layered silicate to increase a spacing between adjacent layers and then ε-caprolactam, which is a momomeric moiety of polyamide, is inserted in the interlayer spaces and simultaneously caused to polycondense, so that a structure is formed incuding the layered silicate in the form of flaky crystals dispersed uniformly throughout a polyamide resin. However, in general, it is extremely difficult to achieve uniform dispersion of the layered silicate, which is highly polar in nature, in not only hydrophilic polymers such as polyamide but also nonpolar polymers such as polyethylene and polypropylene. Various approaches to solving such problems have been disclosed.

For example, a method is disclosed in Japanese Patent Laying-Open No. Hei 9-183910 for dispersing a layered silicate in a polymer by mixing, in a molten state, an organic dispersion containing an organically-modified layered silicate swelled and dispersed in a solvent with a vinyl polymer compound. Japanese Patent Laying-Open No. Hei 10-182892 discloses the melt kneading of an organically-modified layered silicate, a polyolefin oligomer containing a hydrogen-linkable functional group in the amount of not less than 0.001 mmole/g but below 0.45 mmole/g, and a polyolefin polymer, whereby a polyolefinic resin composite material can be prepared incorporating the layered silicate infinitely swelled in the polymer.

However, the method disclosed in Japanese Patent Laying-Open No. Hei 10-182892 requires the use of a solvent. The inclusion of complex steps, such as of dissolving the polymer, swelling the organically-modified layered silicate and removing the solvent, makes the method impracticable from an industrial point of view. Also, the inventors of this application have found it extremely difficult to use, as an industiral material, the material prepared according to the method disclosed in Japanese Patent Laying-Open No. Hei 10-182892 and containing the layered silicate in the form of crystalline flakes dispersed in the polymer. That is, since a reaction between the functional group in the oligomer and a hydroxyl group on a surface of the layered silicate is caused to occur during the melt kneading, the hydroxyl group of the layered silicate is not necessarily treated in an effective manner by the functional group. Accordingly, in practice, a large amount of oligomer is required to achieve uniform dispersion of the layered silicate. The high loading of such an oligomer component in the polymer is undesirable in terms of physical properties and cost.

In Japanese Patent Laying-Open No. Hei 8-302025, a method for production of an inorganic filler containing elastomer is disclosed including the steps of contacting a layered compound with organic cations, allowing the contacted layered compound to swell in an organic solvent (aromatic solvent, in particular), and mixing the swelled layered compound with the elastomer. In Japanese Patent Laying-Open No. Hei 9-48856, a method is disclosed for dispersing a layered silicate in a polymer by mixing an organic dispersion containing an organically-modified layered silicate swelled in a solvent with a vinyl polymer material in a molten state.

However, the methods disclosed in Japanese Patent Laying-Open Nos. Hei 8-302025 and 9-48856 both use a solvent that must be excluded from end products. This necessitates an additional step of removing a solvent. The complete removal of a solvent once entrained between interlayer spaces of the organically-modified layered silicate is extremely difficult to achieve and is thus impractical from an industrial point of view. Also, when the solvent is removed insufficiently to remain in the end product, the end product shows less improvement in mechanical strength than expected and tends to give out an odor over a long period.

So-called nanocomposites obtained via fine dispersion of layered silicates are known as being applicable to hard materials, such as polyamide and polyolefin, which basically exclude a plasticizer. However, a plasticizer-containing soft nanocomposite composition is not known.

## SUMMARY OF THE INVENTION

It is a primary object of the present invention to provide a polyolefinic resin composite material which contains a layered silicate in the form of flakes uniformly dispersed in an olefinic polymer and thereby exhibits the improved mechanical, thermal and gas barrier properties.

A further object of the present invention is to provide a thermoplastic resin composite material which contains a layered silicate in the form of flakes uniformly dispersed in a thermoplastic resin and thereby exhibits the improved mechanical, thermal and gas barrier properties and also to provide a process for producing the same.

These polyolefinic and thermoplastic resin composite materials provided in accordance with the present invention are nanocomposites fabricated using a layered silicate. A resin is incorporated in an enlarged space between adjacent flaky crystals of the layered silicate. Such nanocomposites have an aspect ratio of 20 or higher, preferably in the range of 20 - 500, more preferably in the range of 50 - 200.

The "mean particle diameter", as will be hereinafter used, refers to an arithmetic mean of values given by (major diameter + minor diameter)/2.

In accordance with a broad aspect of a first invention of this application, a polyolefinic resin composite material is provided which is characterized as containing 100 parts by weight of a polyolefinic resin and 0.1 - 50 parts by weight of an organically-modified layered silicate. The organically-modified layered silicate is derived via ion-exchange of metal ions originally contained as exchangeable cations in a crystal structure of a layered silicate with a cationic surfactant, and a hydroxyl group originally present on a crystal side face of the organically-modified layered silicate is chemically modified with a chemical substance having at its molecular terminal a functional group having a tendency to couple chemically to the hydroxyl group or a chemical affinity for the hydroxyl group.

In a particular aspect of the first invention, the functional group having a tendency to couple chemically to the hydroxyl group or a chemical affinity for the hydroxyl group is at least one selected from the group consisting of alkoxy, alkoxysilyl, epoxy, carboxyl, hydroxyl, maleic anhydride, isocyanate and aldehyde groups.

In another particular asepect of the first invention, the chemical substance has two or more carbon atoms.

In a more limited aspect of the first invention, the chemical substance further contains at least one reactive functional group, other than the aforementioned functional group having a tendency to couple chemically to the hydroxyl group or a chemical affinity for the hydroxyl group.

In a furhter particular aspect of the first invention, the reactive functional group is at least one selected from the group consisting of vinyl, amino, epoxy and acryloyl.

In a further particular aspect of the first invention, the chemical substance has a straight chain containing 12 or more carbon atoms.

In a further particular aspect of the first invention, the layered silicate has an average interlayer spacing of not less than 6 nm, when detected by X-ray diffraction measurement.

In a further particular aspect of the first invention, the number of layered silicate particles with a mean diameter of 1 μm or greater does not exceed 100 within a range of 100 μm square.

The polyolefinic resin composite materials of the first invention and the following second invention both contain the layered silicate and its mean interlayer spacing is determined by X-ray diffraction measurement. Preferably, the mean interlayer spacing is not less than 6 nm. Unless dispersed sufficiently, the layered silicate particles are generally held together by ionic interaction and exist stably with an interlayer spacing of about 1 nm. If the ionic interaction between adjacent layers is reduced to a minimum degree, i.e., if the interlayer spacing is increased to 6 nm or greater, flakes of the layered silicate can be disintegrated and then allowed to disperse in a resin.

Also, the successful dispersion of the layered silicate flakes in a resin leads to marked improvements in mechanical strength and thermal properties of the composites.

In accordance with a broad aspect of a second invention of this application, a polyolefinic resin composite material is provided which is characterized as containing 100 parts by weight of a polyolefinic resin and 0.1 - 50 parts by weight of an organically-modified layered silicate. The organically-modified layered silicate is derived via ion-exchange of metal ions originally contained as exchangeable cations in a crystal structure of the organically-modified layered silicate with a cationic surfactant, and a crystal side face of the organically-modified layered silicate is chemically modified by an anionic surface active compound.

In a particular asepct of the second invention, the anionic surface active compound is at least one surfactant selected from the group consisting of carboxylates, sulfonates, sulfate esters, phosphate esters and polyphosphates.

In a more particular asepct of the second invention, the anionic surface active compound contains at least one reative functional group, other than an anionic site present in its molecular chain.

In another particular asepct of the second invention, the reactive functional group is at least one selected from the group consisting of vinyl, amino, acryloyl and epoxy.

In a further particular asepct of the second invention, the anionic surface active compound contains a long chain containing 12 or more carbon atoms.

In a further particular asepct of the second invention, the layered silicate has an average interlayer spacing of not less than 6 nm, when detected by X-ray diffraction measurement.

In a further particular aspect of the first invention, the number of layered silicate particles with a mean diameter of 1 μm or greater does not exceed 100 within a range of 100 μm square.

In accordance with a broad aspect of a third invention of this application, a thermoplastic resin composite material is provided which is characterized as containing a thermoplastic resin, a layered silicate and a plasticizer, with the layered silicate being finely dispersed.

In a particular aspect of the third invention, the layered silicate and plasticizer are incorporated in the respective amounts of 0.1 - 100 and 2 - 300 parts by weight, based on 100 parts by weight of the thermoplastic resin.

In a more particular aspect of the third invention, an organically-modified layered silicate is used for the layered silicate.

In a more limited aspect of the third invention, a polyvinyl butyral resin is used for the thermoplastic resin.

In a further particular asepct of the third invention, the layered silicate has a mean interlayer spacing of not less than 6 nm, when detected by X-ray diffraction measurement.

In a further particular aspect of the third invention, the number of layered silicate particles with a mean diameter of 1 μm or greater does not exceed 100 within a range of 100 μm square.

The thermoplastic resin composite material of the third invention contains the layered silicate and its mean interlayer spacing is determined by X-ray diffraction measurement. Preferably, the mean interlayer spacing is not less than 6 nm. Unless dispersed sufficiently, the layered silicate particles are generally held together by ionic interaction and exist stably with an interlayer spacing of about 1 nm. If the ionic interaction between adjacent layers is reduced to a minimum degree, i.e., if the interlayer spacing is increased to 6 nm or greater, the layered silicate flakes can be disintegrated and allowed to disperse in a resin.

Also, the successful dispersion of the layered silicate flakes in a resin leads to marked improvements in mechanical strength and thermal properties of the composites.

A fourth invention of this application is a process for production of the thermoplastic resin composite material in accordance with the third invention and includes the steps of mixing a layered silicate with a plasticizer to form a mixture and mixing the mixture with a thermoplastic resin.

In a particular aspect of the fourth invention, an organically-modified layered silicate is used for the layered silicate.

In another particular aspect of the fourth invention, the layered silicate and plasticizer are incorporated in the respective amounts of 0.1 - 100 and 2 - 300 parts by weight, based on 100 parts by weight of the thermoplastic resin.

Details of the present invention are below described.

The polyolefinic resin for use in the first and second inventions is not particularly specified in type. Examples of polyolefinic resins include a homopolymer of propylene, random and block copolymers of propylene and ethylene, a homopolymer of ethylene, a copolymer of ethylene and α-olefin, a homopolymer of butene, a homopolymer of isoprene and the like. Examples of α-olefins include propylene, 1-butene, 1-pentene, 1-hexene, 4-methyl-1-pentene, 1-heptene, 1-octene and the like. These polyolefins may be used in any suitable combination, in consideration of resulting physical properties.

The molecular weight and molecular weight distribution of the polyolefinic resin for use in the first and second inventions are not particularly specified. However, it is desired that the polyolefinic resin has a weight average molecular weight perferably in the range of 5,000 - 5,000,000, more preferably in the range of 20,000 - 300,000 and a molecular weight distribution (= weight average molecular weight/number average molecular weight) preferably in the range of 2 - 80, more preferably in the range of 3 - 40.

Suitable additives may be added to the polyolefinic resin for use in the first and second inventions. Such additives as an antioxidant, light stabilizer, UV absorber, lubricant, flame retardant and antistatic agent, may be suitably used to impart desired physical properties. A small amount of a substance serviceable as a crystal nucleus agent can be added to help produce finer crystals leading to more uniform physical properties.

The layered silicate refers to a silicate mineral containing exchangeable cations between adjacent layers.

The type of the layered silicate is not particularly specified. Examples of layered silicates include synthetic layered silicates such as swelling mica; smectite clay minerals such as montmorillonite, saponite, hectorite, beidellite, stevensite and nontronite; vermiculite; halloysite and the like. Such layered silicates, either synthetic or natural, can be suitably used. In view of mechanical strength and gas barrier properties of composite materials, the use of a swelling mica having a high shape anisotropic effect defined by the following equation (1) is more preferred.

Shape anisotropic effect = area of a crystal side face

(A)/area of a crystal layer face (B) (1)

The crystal side face (A) refers to a side face of a flaky crystal, as schematically shown in Figure 1. The crystal layer face (B) refers to each of opposing faces of adjacent flaky crystals.
The layered silicate for use in the present invention is preferably configured to have a mean length of 0.01 - 3 μm, a thickness of 0.001 - 1 μm and an aspect ratio of 20 - 500. More preferably, it has a mean length of 0.05 - 2 μm, a thickness of 0.01 - 0.5 μm and an aspect ratio of 50 - 200.
While not particularly limited, the cation exchange capacity of the layered silicate for use in the present invention is preferably 50 - 200 milliequivalents/100 g. If it is below 50 milliequivalents/100 g, a smaller amount of a cationic surfactant may be intercalated, via ion exchange, between adjacent crystal layers to possibly result in the insufficient nonpolarization of interlayer spaces. On the other hand, if it exceeds 200 milliequivalents/100 g, the adjacent layers of the layered silicate may be bound more tigthly to each other to possibly result in the difficulty to delaminate crystalline flakes.
The organically-modified layered silicate refers to a layered silicate whose cations, i.e., metal ions, are ion-exchanged with a cationic surfactant.
Useful cationic surfactants include, but not limited to, quaternary ammonium salts, quaternary phosphonium salts and the like. The use of quaternary ammonium salts having an alkyl chain of 8 or more carbon atoms is preferred. Without the inclusion of an alkyl chain of 8 or more carbon atoms, the strong hydrophilicity of alkyl ammonium ions prevents the sufficient nonpolarization of interlayer spaces. Examples of quaternary ammonium salts include lauryl trimethyl ammonium salt, stearyl trimethyl ammonium salt, trioctyl ammonium salt, distearyl dimethyl ammonium salt, di-cured tallow dimethyl ammonium, distearyl dibenzyl ammounium salt and the like.
In the first and second inventions, a crystal side face of the organically-modified layered silicate is chemically modified by the aforementioned chemical compound containing at its molecular end a functional group having a tendency to couple chemically to a hydroxyl group or a chemical affinity for a hydroxyl group, or by the anionic surface active compound. The polyolefinic resin composite materials of the first and second inventions contain 0.1 - 50 parts by weight of the organically-modified layered silicate, based on 100 parts by weight of the polyolefinic resin.

(Details of the first invention)

While not particularly specified in type, the above-described "functional group having a tendency to couple chemically to a hydroxyl group or a chemical affinity for a hydroxyl group" needs to be a functional group having at least a chemical affinity for a hydroxyl group. The use of alkoxy, alkoxysilyl, epoxy, carboxyl, hydroxyl, maleic anhydride, isocyanate and aldehyde groups is preferred.
Chemical substances, such as compounds, oligomers and polymers, containing such functional groups are below described.
Examples of such chemical substances include silane compounds, titanate compounds, glycidyl compounds, carboxylic acids, alcohols and the like, all of which contain the above-listed functional groups. The use of alkoxysilyl-containing chemical substances is preferred. A typical example of an alkoxysilyl-containing compound is a silane coupling agent. The alkoxysilyl-containing silane coupling agent can be represented by the following general formula (2).

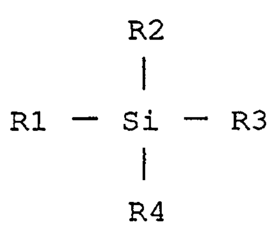
.... Formula (2)

In the general formula (2), examples of R1 include methyl, ethyl, propyl, isopropyl, hexyl, octadecyl and alkyl containing 12 or more carbon atoms.
More preferably, the aforementioned chemical substances contain a long chain having 12 or more carbon atoms for the reasons which follow.
That is, the chemical substance which undergoes a reaction or hydrogen bonding with a hydroxyl group on a crystal side face (A), when kneaded with a polyolefinic resin, is caused to entangle with molecular chains of the resin. This allows the chemical substance to serve as a physicochemical point that initiates delamination of crystal flakes.

The entanglement effect of molecular chains becomes more significant when the molecular weight of the chemical substance is increased. As a result, the layered silicate flakes can be made easy to delaminate. Other than the functional group located at a molecular end of the chemical substance and having a tendency to couple chemically to a hydroxyl group or a chemical affinity for a hydroxyl group, R1 may also contain a reactive functional group. Examples of reactive functional groups include aminopropyl, N-β(aminoethyl)γ-aminopropyl, vinyl, epoxy, acryloyl, maleic anhydride, alkoxy, carboxyl and hydroxyl groups. These reactive functional groups are used for the reasons which follow.

These reactive functional groups, when reacted with a polyolefinic resin in a suitabl manner, can be made to serve as physiochemical active points that initiate delamination. In an exemplary case where the reactive functional group is a vinyl group, a graft reaction thereof with a polyolefinic resin can be caused to occur if a radical generating agent having a suitable half-life temperature, a peroxide and the like are employed during kneading.

That is, the reaction of these reactive functional groups with a suitable reagent results in the chain extension (or increased molecular weight) of R1. This further increases the entanglement effect of molecular chains, so that layered silicate flakes can be made easy to delaminate. The reagent used for reaction with such reactive functional groups is not particularly specified in type. As obvious from the above-described reasons, the direct reaction of such functional groups with a polylefinic resin for use as a matrix resin is also effective.

More preferred among the listed reactive functional groups are vinyl, amino, epoxy and acryloyl groups. If the reactive functional group is a vinyl group, a chemical bond can be readily formed beween the vinyl group and a vinyl-containing reagent or an alkyl group by a trigger such as heat, free-radical initiator, ultraviolet ray, electron beam or the like. If the reactive functional group is an amino group, a chemical bond can be readily formed beween the amino group and a reagent containing an isocyanate, maleic anhydride, carboxyl or carbonyl group by a trigger such as heat, acid, base or the like. If the reactive functional group is an epoxy group, a chemical bond can be readily formed beween the epoxy group and a reagent containing a hydroxyl or the like group by a trigger such as heat, acid, base or the like. If the reactive functional group is an acryloyl group, a chemical bond can be readily formed by a physical trigger such as a electron beam, radiation or ultraviolet ray, or by a chemical trigger such as an azo comopund or peroxide.

The structure of R2, R3 or R4 is not particularly specified unless it contains a functional group having a tendency to couple chemically to a hydroxyl group or a chemical affinity for a hydroxyl group. Examples include methyl, ethyl, methoxy, ethoxy and the like.

Preferably, the aforementioned chemical substance has two or more carbon atoms. The silane coupling agent represented by the above general formula (2) is one example. Other examples of such chemical substances include vinyltrimethoxysilane, vinyltriethoxysilane, vinyltris (β-methoxyethoxy)silane, γ-aminopropyltrimethoxysilane, γ-aminopropylmethyldimethoxysilane, γ-aminopropyldimethylmethoxysilane, γ-aminopropyltriethoxysilane, γ-aminopropylmethyldiethoxysilane, γ-aminopropyldimethylethoxysilane, methyltriethoxysilane, dimethyldimethoxysilane, trimethylmethoxysilane, hexyltrimethoxysilane, hexyltriethoxysilane, N-β(aminoethyl) γ-aminopropyltrimethoxysilane, N-β(aminoethyl)γ-aminopropyltriethoxysilane, N-β(aminoethyl)γ-aminopropylmethyldimethoxysilane, octadecyltrimethoxysilane, octadecyltriethoxysilane, γ-methacryloxypropylmethyldimethoxysilane, γ-methacryloxypropyltrimethoxysilane, γ-methacryloxypropylmethyldiethoxysilane, γ-methacryloxypropyltriethoxysilane, γ-glycidoxypropyltrimethoxysilane, γ-glycidoxypropylmethyltriethoxysilane, γ-glycidoxypropyltriethoxysilane and the like.

The most noticeable feature of this invention resides in that a hydroxyl group on a crystal side face of the organically-modified layered silicate is chemically modified in an efficint manner by a chemical composition containing at its molecular end a functional group having a tendency to couple chemically to a hydroxyl group or a chemical affinity for a hydroxyl group. This permits efficient treatment of a hydroxyl group persent on a cystal face of the organically-modified layered silicate with a small amount of a chemical substance. Further, the chemical composition couples to a crystal end face of the layered silicate. Accordingly, the chemical composition can be expected to serve as a physicochemical active point when each crystalline flake is delaminated. The action and effect of this invention are below described.

Each crystalline flake of the layered silicate 1 as schematically shown in Figure 1 generally takes the form of a tetrahedron 11 with a center silicon or the like ion bound to surrounding four oxygen ions, or an octahedron 12 with a center aluminum or the like ion bound to surrounding six oxygen ions or hydroxyl ions, as illustrated by a structure of montmorillonite shown in Figure 2. When sodium, calcium or other ions are arranged on the crystal layer surface (B), these crystal flakes are combined together by ionic bonding force.

Such sodium or calcium ions located between adjacent layers of the layered silicate are ion-exchangeable with a cationic surfactant such as an alkyl ammonium salt. To illustrate the use of highly nonpolar cationic species, e.g., a distearyldimethyl ammonium salt, for the alkyl ammonium salt, the crystal layer surface (B) is nonpolarized to result in the comparative improvement in dispersibility of the layered silicate in a nonpolar polymer.

However, hydroxyl groups present on the crystal side face (A) remain as polar sites even after the ion-exchange. This is one of causes that prevent uniform dispersion of the organically-modified layered silicate in a nonpolar polymer. In this invention, because such hydroxyl groups present on the crystal side face (A) are chemically modified by the chemical substance containing at its molecular terminal a functional group having a tendency to couple chemically to a hydroxyl group or a chemical affinity for a hydroxyl group, the compatibility between the layered silicate and the polyolefinic resin which is a nonpolar polymer is markedly improved so that the unform dispersion of the layered silicate in a polymer can be readily accomplished.

The compatibility between the layered silicate and the polyolefinic resin which is a nonpolar polymer is further improved, provided the chemical substance contains two or more carbon atoms.

Also, the chemical substance which undergoes a reaction or hydrogen bonding with a hydroxyl group on a crystal side face (A), when kneaded with a polyolefinic resin, is caused to entangle with molecular chains of the resin. This allows the chemical substance to serve as a physicochemical point that initiates delamination of crystal flakes. That is, a stress required to delaminate a crystal flake is made much smaller than when such a chemical substance resides on the crystal layer surface (B).

This can be readily explained using a model shown in Figure 3. Assume a situation where an adhesive sheet 3 is delaminated from a substrate 4. A much smaller force is required in delaminating the sheet when the sheet is grasped at its end and a pulling force is applied in the direction of the arrow, as shown in Figure 3(a), than when the sheet is grasped at its near center and a pulling force is applied in the direction of the arrow, as shown in Figure 3(b). It will be readily inferred from this mechanism that a stress engendered during the kneading for delaminating flakes can be further increased by reacting the chemical substance with a polyolefinic resin.

Such a point is not taken into account in the invention disclosed in Japanese Patent Laying-Open No. Hei 10-182892. This is why its difficulty to estabilish uniform dispersion has been verified by the inventors of this invention after their studies.

Generally, an elastic modulus of a composite material composed of a polyolefin resin and a layered silicate increases with enhanced dispersion of crystalline flakes of the layered silicate in a polymer. This phenomenon can be explained by the interfacial area between the layered silicate and resin that increases with enhanced dispersion of the crystalline flakes. That is, the restricted molecular motion of a polymer at its surface adhered to an inorganic crystal increases a mechanical strength such as an elastic modulus of a polymer. Accordingly, the dispersion of a higher proportion of crystalline flakes results in the efficient increase of polymer strength.

Also, the finer dispersion of crystalline flakes of the layered silicate throughout a polymer results in a marked improvement in gas barrier properties of the polyolefinic resin composite material. Diffusion of gas molecules is much faster in a polymer than in an inorganic substance. Accordingly, any gas molecules when brought in the composite material of this invention bypass the layered silicate 1 and diffuse preferentially throughout the polyolefinic resin 2, as shown in Figure 4. Again in this case, the dispersion of a higher proportion of crystalline flakes results in the efficient increase in gas barrier properties.

The use of the composite material of this invention allows dispersion of a markedly high proportion of crystalline flakes, resulting in obtaining a polyolefinic material excellent in mechanical strength and gas barrier properties.

The technique described in Japanese Patent Laying-Open No. Hei 9-183910 contemplates to increase dispersibility of crystalline flakes by initially impregnating an organic solvent in between adjacent layers of a layered silicate to thereby increase an interlayer spacing thereof. Although found to be effective to improve oxygen barrier properties, the use of this technique showed virtually no contribution to an elastic modulus improvement probably as a result of a persistent reminder of the solvent. The provision of a vent port in an extruder is not sufficient to completely remove such a solvent. In this sense, adoption of this technique appears difficult from an industrial point of view.

By the development of the process whereby the composite material of this invention was obtained, the increase in heat deformaion temperature due to restriction of molecular chains is expected to result. Also, the diffusion of a combustion gas is expected to be suppressed. Further, organic crystals are expected to serve as a nucleus agent. These effects result in the marked improvements in various physical properties including heat resistance, flame retardance, dimensional stability of polyolefinic resins.

(Details of the second invention)

The anionic surface active compound for use in the second invention is not particularly specified in type but needs to contain a functional group having a high chemical affinity for positive charges. Examples of compouds having such a functional group include anionically functional carboxylates such as sodium laurate, sodium stearate and sodium oleate; higher alcohol sulfate salts such as sodium lauryl alcohol sulfate, ammonium lauryl alcohol sulfate, sodium cetyl alcohol sulfate, ammonium cetyl alcohol sulfate, sodium stearyl alcohol sulfate, ammonium stearyl alcohol sulfate, sodium oleyl alcohol sulfate and ammonium oleyl alcohol sulfate; sulfate salts such as higher alkyl ether sulfate salts, sulfated oil, sulfated fatty acid esters and sulfated olefins; sulfonates such as sodium alkylbenzene sulfonate, sodium alkylnaphthalene sulfonate, sodium paraffin sulfonate and sodium di-2-ethylhexyl sulfosuccinate; phosphate salts such as sodium higher alcohol phosphate, ammonium higher alcohol phosphate, sodium polyphosphate and ammonium polyphosphate. Other than these compound, a compound can also be suitably used if it has an anion-generating site in its molecular chain.

Preferably, the anionic surface active compound also contains one or more reactive functional groups at its site other than the anionic site in its molecular chain. It is also preferred that the anionic surface active compound has a straight chain containing 12 or more carbon atoms.

These are based on the grounds which follow. That is, when the compound is kneaded with a polyolefinic resin, the molecular chain contained in the compound and chemically modified at the crystal side face (A) is caused to entangle with molecular chains of the resin. This enables the molecular chain to serve as a physicochemical point that initiates delamination of crystalline flakes. The entanglement effect of such molecular chains becomes more significant when the molecular weight of the reagent is increased. As a result, layered silicate flakes can be made easy to delaminate. It would be obvious that the same result can be obtained when the reactive functional group in the reagent is reacted with a polyolefinic resin.

The reactive functional group is not particularly specified in type. Examples of reactive functional groups include vinyl, acryloyl, epoxy, maleic anhydride, alkoxy, carboxyl and hydroxyl groups. Among these groups, vinyl and acryloyl groups are preferred which facilitate synthesis of surfactants.

The most noticeable feature of the second invention is that the crystal side face (A) of the organically-modified layered silicate is chemically modified by the anionic surface active compound. Expectedly, this allows the anionic surface active compound to serve as a physicochemically active point when each crystalline flake of the organically-modified layered silicate is delaminated.

As similar to the description given in explaining the first invention, positive charges present on the crystal side face (A) shown in Figure 2 remain even after the ion-exchange. This was one of causes that prevented uniform dispersion of the organically-modified layered silicate in a nonpolar polymer. In the second invention, positive charges present on the crystal side face (A) are chemically modified with the anionic surface active reagent. By this feature, a compatibility of the layered silicate with the polyolefinic resin which is a nonpolar polymer is markedly improved so that unform dispersion of the layered silicate in a polymer can be readily achieved.

The anionic surface active reagent that chemically modifies the positive charges present on the crystal side face (A), when kneaded with a polyolefinic resin, is also caused to entangle with molecular chains of the resin. This allows the reagent to serve as a physicochemical point that initiates delamination of a crystalline flake. That is, a stress required to delaminate the crystal flake is made much smaller than when such a compound resides on the crystal layer surface (B).

This can be readily explained using a model shown in Figure 3. Assuming a situation where an adhesive sheet is delaminated from a substrate, a much smaller force is needed in delaminating the sheet when the sheet is grasped at its end than when the sheet is grasped at its near center. It would be readily inferred from this mechanism that a stress engendered during the kneading for delaminating flakes can be further increased by reacting the chemical composition with a polyolefinic resin. Such a point is not taken into account in the invention disclosed in Japanese Patent Laying-Open No. Hei 10-182892. This is why its difficulty to estabilish uniform dispersion has been verified by the inventors of this invention after their studies.

(Details of the third and fourth inventions)

The thermoplastic resin for use in the third and fourth inventions is not particularly specified in type. Examples of useful thermoplastic resins include resins such as polyvinyl acetal, polyvinyl chloride, polyvinyl acetate, polystyrene, polyolefin, polymethacrylate ester, polyacrylate ester, polyvinyl alcohol, cellulose ester and nitrocellulose; various rubbers represented by NBR, SBR, chloroprene, isoprene rubber, butadiene rubber, butyl rubber, urethane rubber and norbornene rubber; and the like.

Examples of polyolefins include a homopolymer of propylene, random and block copolymers of propylene and ethylene, a homopolymer of ethylene, a copolymer of ethylene and $\alpha$-olefin, a homopolymer of butene, a homopolymer of isoprene and the like. Examples of $\alpha$-olefins include 1-butene, 1-pentene, 1-hexene, 4-methyl-1-pentene, 1-heptene, 1-octene and the like.

Particularly when good transparency and adhesion are required, a polyvinyl acetal resin obtained via acetal formation using an aldehyde containing 1 - 10 carbon atoms, among the above-listed thermoplastic resins, is suitably used. Particularly preferred is polyvinyl butyral obtained via acetal formation using an aldehyde of 4 carbon atoms, i. e., butyraldehyde.

The above-listed resins may be used in any suitable combination thereof, in consideration of required physical properties.

The molecular weight and molecular weight distribution of the thermoplastic resin for use in the third and fourth inventions are not particularly specified. However, it is desired that the thermoplastic resin has a weight average molecular weight of 5,000 - 5,000,000, preferably 20,000 - 1,000,000 and a molecular weight distribution of 2 - 80, preferably 3 - 40.

The molecular weight distribution is given by weight average molecular weight/number average molecular

weight.

The layered silicate for use in the third and fourth inventions is similar to the layered silicate for use in the first invention. Accordingly, the description given in explaining the first invention also applies.

The layered silicate may be used without being further processed, or treated into the organically-modified layered silicate befor use. The use of the organically-modified layered silicate is preferred.

The same organically-modified layered silicate as used in the first and second inventions can be used.

Preferably, the layered silicate or organically-modified layered silicate is loaded in the amount of 0.1 - 100 parts by weight, based on 100 parts by weight of the thermoplastic resin. The loading of below 0.1 parts by weight is too small to impart desired physical properties. On the other hand, if the loading exceeds 100 parts by weight, a resin content of the composite material becomes small to sometimes result in the unfavorable reduction of physical properties such as impact resistance. More preferably, the layered silicate or organically-modified layered silicate is loaded in the amount of 0.1 - 100 parts by weight.

The layered silicate or organically-modified layered silicate needs be in the form of a fine dispersion. If the layered silicate or organically-modified layered silicate having a size of 1 μm or larger, which permits observation with the eye or under a scanning electron microscope (SEM), is present in an excess amount, it undesirably affects the mechanical strength, particularly tranparency. The number of the layered silicate or organically-modified layered silicate having a size of 1 μm or larger is preferably 100 or less, more preferably 50 or less, within a 100 μm x 100 μm square.

The type of the plasticizer for use in this invention is not particularly specified. Phosphate ester, phthalate ester, fatty acid ester, glycol ester and epoxy plasticizers may be used. Specific examples of suitable plasticizers include tricresyl phosphate, trioctyl phosphate, dibutyl phthalate, dioctyl phthalate, dioctyl adipate, dioctyl azelate, dioctyl sebacate, triethylene glycol di-ethylbutyrate, triethylene glycol di-ethylhexoate, triethylene glycol di-butylsebacate, epoxized soybean oil and the like. The plasticizer may be suitably chosen from the above-listed substances depending upon the type of the thermoplastic resin used, under considerations such as of compatibility with the resin.

Preferalby, the plasticizer is loaded in the amount of 2 - 300 parts by weight, based on 100 parts by weight of the thermoplastic resin. The loading of below 2 parts by weight is insufficient for thourough dispersion of the layered silicate or organically-modified layered silicate. On the other hand, if the loading exceeds 300 parts by weight, bleeding of the plasticizer may be undesirably caused to occur. The more preferred loading of the plasticizer is 5 - 100 parts by weight. Also preferably, the plasticizer is loaded in the amount of 0.5 - 100 parts, based on 1 part layered silicate or organically-modified layered silicate.

In the case where the thermoplastic resin is polyvinyl butyral suitable for use when good transparency and adhesion are required, the plasticizer is perferably loaded in the amount of 5 - 100 parts by weight, more preferably 30 - 70 parts by weight.

Any process may be utilized to obtain the thermoplastic resin composite material of the third invention. A particulaly preferred process involves mixing the layered silicate or organically-modified layered silicate with the plasticizer according to the fourth invention to thereby expand an interlayer spacing of adjacent layers of the layered silicate or organically-modified layered silicate, and then adding the mixture to the resin for the subsequent kneading. In this instance, a process may be utilized wherein a part of the plasticizer is first mixed with a whole amount of the layered silicate or organically-modified layered silicate and then a reminder of the plasticizer is added for further mixing.

Various additives can be added to the thermoplastic resin composite material of this invention, when needed. Such additives include, for example, an antioxidant, light stabilizer, UV absorber, lubricant, flame retardant, antistatic agent and the like.

The plasticizer can be mixed with the layered silicate or organically-modified layered silicate by any suitable apparatus. Generally employed are a planetary stirring machine, wet mechanochemical apparatus, Henschel mixer, homogenizer and ultrasonic emitter.

Any machine can be utilized to knead the resin, plasticizer and layered silicate or organically-modified layered silicate. An extruder, plastograph, kneader, Banbury mixer, calender roll and the like can be employed. The use of an extruder is preferred in terms of series production.

The thermoplastic resin composite material of the third invention is applicable for various uses that correspond to the types of the resins used. For example, a composite material comprised of a combination of polyvinyl butyral, a layered silicate or organically-modified layered silicate and a plasticizer can be used for an interlayer, especially a multi-layered interlayer of a laminated glass, for an intermediate layer of a multi-layered sound-insulating interlayer, and for an interlayer of an architectural or automotive laminated glass. Also, a composite material comprised of a combination of polyvinyl chloride, a layered silicate or organically-modified layered silicate and a plasticizer is applicable as a soft vinyl chloride or a rubber for various uses including an agricultural vinyl sheeting, food packaging, leather, film, damping sheet, wall covering and tubes, coatings and adhesives.

In general, the finer dispersion of layered silicate in a resin results in more marked improvements in mechanical strength, gas barrier properties and transparency of thermoplastic resin-layered silicate composites. This can be explained by an area of interfaces that increases with improved dispersion of the layered silicate. That is, because an

elastic modulus or other mechanical strength of a polymer is increased by the restricted molecular motion of the polymer at an interface between the resin and inorganic crystal, the improved dispersion of the layered silicate leads to the efficient increase in strenght of the polymer. Also, diffusion of gas molecules is much faster in a polymer layer than in an inorganic substance. Accordingly, any gas molecules when brought in the composite material diffuse therethrough while bypassing the inorganic substance. A higher degree of dispersion of the layered silicate thus leads to the efficient increase of gas barrier properties.

Further, in the case where a layered silicate is loaded in a transparent resin, the dispersed layered silicate, if it remains in large sizes, scatters a light to make the resin opaque, but if it is finedly dispersed, less scatters a light, leading to easier transmission of the light and accordingly higher transparency of the resin.

As stated above, the followings should be most noticed in the third and fourth inventions. When a layered silicate is dispersed in a resin, the penetration of a plasticizer into interlayer spaces enables efficent and fine dispersion of the layered silicate in the resin. Since there is no need to remove the plasticizer, composite materials with excellent physical properties can be obtained in a simpler manner. It should be also noticed that the fine dispersion of the layered silicate results in obtaining soft composite materials with well-balanced strength and flexibility.

## BRIEF DESCRIPTION OF THE DRAWINGS

Figure 1 is a schematic perspective view of a layered silicate for use in obtaining a polyolefinic resin composite material in accordance with the present invention;
Figure 2 is a conceptional view of a principal part of the layered silicate shown in Figure 1 as it is partially enlarged;
Figure 3 is a side view, showing an adhesive sheet in the process of being delaminated from a substrate; and
Figure 4 is a schematical sectional view, showing gas molecules in the state of permeating through a polyolefinic resin composite material in accordance with the present invention.

## DESCRIPTION OF THE PREFERRED EXAMPLES

The present invention is clarified by referring to the following specific examples.

(EXAMPLES OF THE FIRST INVENTION)

The raw material used in the Examples and Comparative Examples of the first invention are first specified.

<u>Layered Silicate</u>

The following minerals were emplolyed for the layered silicate.

Montmorillonite: montmorillonite (product name; BENGEL A) manufactured by Hojyun Kogyo.

Swelling mica: swelling mica (product name; ME-100) manufactured by Corp Chemical.

<u>Cation Surfactant-Containing Layered Silicate</u>

The following materials were used for the cation surfactant-containing layered silicate.

DSDM-modified montmorillonite: DSDM-modified montmorillonite (product name; NEW ESBEN D = organically-modified montmorillonite derived via ion-exchange of a whole amount of sodium ions present in interlayer spaces of montmorillonite with distearyldimethyl ammonium chloride) manufactured by Hojyun Kogyo.

DSDM-modified swelling mica: DSDM-modified swelling mica (product name; MAE = organically-modified swelling mica derived via ion-exchange of a whole amount of sodium ions present in interlayer spaces of montmorillonite with distearyldimethyl ammonium chloride) manufactured by Corp Chemical.

<u>Chemical Composition Modifying Crystal Side Face (A)</u>

The following compositions were used for the chemical composition that modifies the crystal side face (A).
Aminopropyltrimethoxysilane (reagent manufactured by Shinetsu Chemical)
Octadecyltrimethoxysilane (reagent manufactured by Shinetsu Chemical)
Methacryloxytrimethoxysilane (reagent manufactured by Shinetsu Chemical)
Vinyltrimethoxysilane (reagent manufactured by Shinetsu Chemical)
γ-glycidoxypropyltrimethoxysilane (reagent manufactured by Shinetsu Chemical)

Alkoxysilyl-terminated polyisobutylene (weight average molecular weight of 20,000, product of Kanegafuchi Chemical, product name; EPION)

Polyolefinic Resin Composition

The following compositions were used for the polyolefinic resin.
Polypropylene (product of Nippon Polychem, product name; EA9)
Polyethylene (product of Nippon Polychem, product name; HB530)

Peroxide

For the purpose of grafting an unsaturated bond present in methacryloxytrimethoxysilane or vinyltrimethoxysilane to a polypropylene resin, the following peroxide was used.
2,5-dimethyl-2,5-bis(t-butylperoxy)hexane (product of Nippon Oil and Fat, product name; PERHEXA 25B, one-minute half-life temperature = 180 °C)

Reactive Reagent

The following compounds were used to cause a layered silicate treated with aminopropyltrimethoxysilane (reagent manufactured by Sinetsu Chemical) to undergo a chemical reaction.
Stearyl alcohol (reagent from Wako Jyunyaku)
Epichlorohydrin (reagent from Wako Jyunyaku)

Polyolefinic Oligomer

The following composition was used as a resin oligomer for comparison to prior art.
Maleic anhydride-modified polypropylene oligomer (product of Sanyo Chemical, product name; Umex 1001, functionality content = 0.23 mmole/g)

Organic solvent for preparation of slurry dispersion

The following organic solvent was used as a solvent for comparison to prior art. Its use is contemplated to expand an interlayer spacing by impregnation into interlayer spaces of an organically-modified slurry.
Xylene (reagent from Wako Jyunyaku)

(PROCEDURE UTILIZED TO TREAT CRYSTAL SIDE FACE (A))

The following procedure was utilized to provide treated powders A - F and an untreated powder.

Treated powder A: 100 g of a 2 wt.% aqueous solution of aminopropyltrimethoxysilane was added dropwise over a period of 3 minutes to 500 g of DSDM-modified montmorillonite while stirred in a Henschel mixer. After completion of dropwise addition, stirring was continued for additional 10 minutes. The resulting powder was dried for a period of 8 hours in a vacuum dryer controlled at 70 °C to prepare a treated powder A.

Treated powder B: The procedure used to prepare the treated powder A was followed, except that aminopropyltrimethoxysilane was replaced by octadecyltrimethoxysilane, to prepare a treated powder B.

Treated powder C: The procedure used to prepare the treated powder A was followed, except that aminopropyltrimethoxysilane was replaced by methacryloxytrimethoxysilane, to prepare a treated powder C.

Treated powder C-2: The procedure used to prepare the treated powder A was followed, except that aminopropyltrimethoxysilane was replaced by vinyltrimethoxysilane, to prepare a treated powder C-2.

Treated powder C-3: The procedure used to prepare the treated powder A was followed, except that aminopropyltrimethoxysilane was replaced by glycidoxypropyltrimethoxysilane, to prepare a treated powder C-3.

Treated powder C-4: The procedure used to prepare the treated powder A was followed, except that aminopropyltrimethoxysilane was replaced by alkoxysilyl-terminated polyisobutylene, to prepare a treated powder C-4.

Treated powder D: The procedure used to prepare the treated powder A was followed, except that DSDM-modified montmorillonite was replaced by organically-modified swelling mica, to prepare a treated powder D.

Treated powder E: The procedure used to prepare the treated powder A was followed, except that DSDM-modified montmorillonite was replaced by montmorillonite, to prepare a treated powder E.

Treated powder F: The procedure used to prepare the treated powder A was followed, except that DSDM-modified montmorillonite was replaced by montmorillonite and aminopropyltrimethoxysilane was replaced by octadecyltrimethoxysilane, to prepare a treated powder F.

Untreated powder: DSDM-modified montmorillonite was used.

Reaction between the treated powder C-3 and epichlorohydrin: A five-fold amount of epichlorohydrin, based on the amount of glycidoxypropyltrimethoxysilane, was reacted with the treated powder.

Reaction of the treated powder A with epichlorohydrin and stearyl alcohol: Aminopropyltrimethoxysilane was reacted with epichlorohydrin. Thereafter, stearyl alcohol was added to effect a further reaction.

The layered silicate and other materials used to prepare these treated powders and untreated powder are specified in Table 1.

TABLE 1

| | Layered Silicate | Organic Substance Used for Ion-Exchanging | Chemical Substance for Modification of A Crystal Side Face (A) |
|---|---|---|---|
| Treated Powder A | Montmorillonite | Distearyl Dimethyl Quaternary Ammonium | Aminopropyltrimethoxysilane |
| Treated Powder B | Montmorillonite | Distearyl Dimethyl Quaternary Ammonium | Octadecyltrimethoxysilane |
| Treated Powder C | Montmorillonite | Distearyl Dimethyl Quaternary Ammonium | Methacryloxytrimethoxysilane |
| Treated Powder C-2 | Montmorillonite | Distearyl Dimethyl Quaternary Ammonium | Vinyltrimethoxysilane |
| Treated Powder C-3 | Montmorillonite | Distearyl Dimethyl Quaternary Ammonium | Glycidoxypropyltrimethoxysilane |
| Treated Powder C-4 | Montmorillonite | Distearyl Dimethyl Quaternary Ammonium | Alkoxysilyl-Terminated POlyisobutylene |
| Treated Powder D | Swelling Mica | Distearyl Dimethyl Quaternary Ammonium | Aminopropyltrimethoxysilane |
| Treated Powder E | Montmorillonite | - | Aminopropyltrimethoxysilane |
| Treated Powder F | Montmorillonite | - | Octadecyltrimethoxysilane |
| Untreated Powder | Montmorillonite | Distearyl Dimethyl Quaternary Ammonium | - |

(PROCEDURE UTILIZED TO PREPARE TEST SAMPLES)

A resin and each treated powder, in the ratio by weight of 92.7/7.7, were fed in a small extruder (TEX-30), made by Nippon Seikosho, and melt kneaded therein at a set temperature of 200 °C. The extruded strands were pelletized by a pelletizer. The pellets obtained were compressed by a heat press controlled at 200 °C into 2 mm or 100 µm thick plates.

In the case where a material is provided in a liquid form, a predetermined amount of the material was fed midway in the extruder using a plunger or gear pump. In the below-described Comparative Example 3, a plunger pump was used to feed a liquid-form peroxide (PERHEXA 25B). In the below-described Comparative Example 8, the untreated powder was introduced in an 9-fold weight of xylene. The following one hour of stirring resulted in formation of a slurry. This slurry was fed midway in the extruder using a gear pump and desolvated form a vent port attached to the extruder.

(TEST METHODS USED TO EVALUATE SAMPLES)

(FLEXURAL MODULUS)

Test samples were cut out from the above-obtained 2 mm thick plates. Flexural modulus measurement using a Tensilon tester was performed on these samples according to a method specified in JIS K 7207.

(GAS BARRIER PROPERTY)

Test samples were cut out from the above-obtained 100 μm thick plates. Measurement of oxygen permeation rate using an oxygen permeation tester (Oxtran-Twin; name used in trade and manufactured by Modern Controls Inc.) was performed on these samples.

EXAMPLES 1 - 5 AND COMPARATIVE EXAMPLES 1 - 8

The above-listed polyolefinic resins and treated powders were used to prepare samples of polyolefinic resin composite materials of the present invention according to the above-described sample preparation procedure. Physical properties of those resin composite materials were evaluated according to the above-described test methods. The results are given in Table 2. In Table 2, formulation materials used in Examples and Comparative Examples and physical property evaluation results of samples are also listed.

Table 2

| | Loaded Powder | Polyolefinic Resin | Flexural Modulus (Gpa) | Oxygen Transmittance ($cc/cm^2/day$) |
|---|---|---|---|---|
| Ex.1 | Treated Powder A | EA9 | 2.79 | 130 |
| Ex.2 | Treated Powder B | EA9 | 2.74 | 122 |
| Ex.3 | Treated Powder C | 99.9/0.1 Mixture of EA9/Perbutyl-D | 3.22 | 142 |
| Ex.3-2 | Treated Powder C-2 | 99.9/0.1 Mixture of EA9/Perbutyl-D | 3.11 | 137 |
| Ex.3-3 | Reaction product Of Treated Powder C-3 and Epichlorohydrin | EA9 | 2.69 | 166 |
| Ex.3-4 | Reaction product Of Treated Powder A, Epichlorohydrin and Stearyl Alcohol | EA9 | 2.99 | 143 |
| Ex.3-5 | Treated Powder C-4 | EA9 | 2.78 | 158 |
| Ex.4 | Treated Powder D | EA9 | 3.42 | 120 |
| Ex.5 | Treated Powder A | HB530 | 2.12 | - |
| Comp.Ex.1 | - | EA9 | 1.37 | 284 |
| Comp.Ex.2 | - | HB530 | 0.76 | - |
| Comp.Ex.3 | Untreated Powder | EA9 | 1.46 | 241 |
| Comp.Ex.4 | Treated Powder E | EA9 | 1.72 | 220 |
| Comp.Ex.5 | Treated Powder F | EA9 | 1.48 | 242 |
| Comp.Ex.6 | Untreated Powder | 80/20 Mixture of EA9/Umex 1001 | 2.12 | 280 |
| Comp.Ex.7 | Untreated Powder | 80/20 Mixture of EA9/Umex 1001 | 1.98 | 205 |
| Comp.Ex.8 | 1/9 Mixture of Untreated Powder/Xylene | EA9 | 1.33 | 205 |

In Comparative Examples 1 and 2, a polypropylene resin or a polyethylene resin was solely extruded to

prepare samples for subsequent evaluation of physical properties. The extrusion comprised solely of a polypropylene resin exhibited a flexural moduluss of 1.37 Gpa and an oxygen permeability of 284 cc/cm$^2$/day. As indicated by Comparative Example 3, the use of a layered silicate organically treated with a cationic surfactant alone resulted in slight property improvements; a flexural moduluss of 1.46 Gpa and an oxygen barrier property of 241 cc/cm$^2$/day. In contrast, the use of a polyolfinic oligomer containing a functional group having a tendency to couple to hydrogen, as disclosed in Japanese Patent Laying-Open No. Hei 10-182892, led to improvements in physical properties of a resulting polymer as demonstrated in Comparative Example 7; a flexural modulus of 1.98 Gpa and an oxygen barrier property of 205 cc/cm$^2$/day. However, when the polyolfinic oligomer containing a functional group of a tendency to couple to hydrogen was increased in amount, as demonstrated in Comparative Example 6, an oxygen barrier property was observed to drop to a value of 280 cc/cm$^2$/day. This is probably because the abundant inclusion of acid-modified oligomer in polypropylene caused a structural disorder of polypropylene that led to the gas permeability improvement.

In contrast, when the composition capable of chemical modification of a crystal side face (A) was used instead of using the polyolfinic oligomer containing a functional group of a tendency to couple to hydrogen, as illustrated by Examples 1 - 5, marked property improvements were observed, i.e., a flexural modulus was at least doubled and an oxygen barrier property was reduced to a half or less, compared to the case where a polypropylene resin was used alone. It was remarkable that excellent physical properties were observed for samples obtained in Examples 3 and 3-2 where a peroxide was used; 3.22 Gpa and 3.11 Gpa for flexural modulus and 145 cc/cm$^2$/day and 137 cc/cm$^2$/day for oxygen permeability.

This is probably because dispersion of crystalline flakes of the layered silicate was further promoted by a chemical reaction of an unsaturated bond located at an end of the chemical composition that modifies a crystal side face (A) with a polypropylene backbone chain, which was effective in a manner similar to a model shown in Figure 2 to delaminate the crystalline flakes. Examples 3-3, 3-4 and 3-5 were contemplated to promote delamination of crystalline flakes of the layered silicate by increasing a molecular weight of the chemical composition that treated the layered silicate. In either case, the increased flexural modulus and improved oxygen barrier property were observed.

As demonstrated by the results of Example 4, the use of the layered silicate having a high shape anisotropic effect (swelling mica) was found to provide further property improvements. The results of Example 5 demonstrated that the present invention was effective even in the case where a polypropylene resin was replaced by other polyolefinic resin.

Comparative Example 8 followed the method described in Japanese Patent Laying-Open No. Hei 9-183910. This method was contemplated to promote dispersion of crystalline flakes by previously impregnating an organic solvent in interlayer spaces of the layered silicate to thereby expand interlayer spacings. In fact, while a certain improvement in oxygen barrier property was observed, an improvement in flexural modulus was hardly achieved due to the difficulty to remove a residual solvent. The provision of a vent port in an extruder is not enough to accomplish complete removal of a solvent. In this sense, the technique is considered far from realistic from an industrial point of view.

(EXAMPLES OF THE SECOND INVENTION)

The raw material used in the Examples of the second invention are below specified.

Layered Silicate

Montmorillonite and swelling mica were provided, as similar to Examples of the first invention.

Cation Surfactant-Containing Layered Silicate

DSDM-modified montmorillonite and DSDM-modified swelling mica were provided, as similar to Examples of the first invention.

Chemical Composition Modifying Crystal Side Face (A)

The following chemical substances were used for the chemical substance that modifies the crystal side face (A).

Sodium alkylbenzenesulfonate (product of Sanyo Chemical)
Sodium oleate (product of Sanyo Chemical)
Acryloyl-containing sulfonate ester (product of Sanyo Chemical, product name: ELEMINOL)
Ammonium polyphosphate (reagent of Wako Jyunyaku)

Polyolefinic Resin Composition

The following compositions were used for the polyolefinic resin.
Polypropylene (product of Nippon Polychem, product name; EA9)
Polyethylene (product of Nippon Polychem, product name; HB530)

Peroxide

For the purpose of grafting an unsaturated bond present in sodium oleate or acryloyl-containing sulfonate ester to a polypropylene resin, the following peroxide was used.
2,5-dimethyl-2,5-bis(t-butylperoxy)hexane (product of Nippon Oil and Fat, product name; PERHEXA 25B, one-minute half-life temperature = 180 °C)

Polyolefinic Oligomer

The following composition was used as a resin oligomer for comparison to prior art.
Maleic anhydride-modified polypropylene oligomer (product of Sanyo Chemical, product name; Umex 1001, functionality content = 0.23 mmole/g)

Organic solvent for preparation of slurry dispersion

The following organic solvent was used as a solvent for comparison to prior art. Its use was contemplated to expand an interlayer spacing by impregnation in interlayer spaces of an organically-modified slurry.
Xylene (reagent from Wako Jyunyaku)

(PROCEDURE UTILIZED TO TREAT CRYSTAL SIDE FACE (A))

The following procedure was utilized to provide treated powders G - L and an untreated powder.
Treated powder G: A 2 wt.% aqueous solution of sodium alkylbenzenesulfonate was added dropwise over a period of 3 minutes to 500 g of DSDM-modified swelling mica while stirred in a Henschel mixer. After completion of dropwise addition, stirring was continued for additional 10 minutes. The resulting powder was dried for a period of 8 hours in a vacuum dryer controlled at 70 °C to prepare a treated powder G.
Treated powder H: The procedure used to prepare the treated powder G was followed, except that sodium alkylbenzenesulfonate was replaced by sodium oleate, to prepare a treated powder H.
Treated powder I: The procedure used to prepare the treated powder G was followed, except that sodium alkylbenzenesulfonate was replaced by an acryloyl-containing sulfonate ester, to prepare a treated powder I.
Treated powder J: The procedure used to prepare the treated powder G was followed, except that sodium alkylbenzenesulfonate was replaced by ammonium polyphosphate, to prepare a treated powder J.
Treated powder K: The procedure used to prepare the treated powder G was followed, except that DSDM-modified swelling mica was replaced by DSDM-modified montmorillonite, to prepare a treated powder K.
Treated powder L: The procedure used to prepare the treated powder G was followed, except that DSDM-modified swelling mica was replaced by DSDM-unmodified swelling mica, to prepare a treated powder L.
Untreated powder: DSDM-modified swelling mica was used.
The layered silicate and other materials used to prepare these treated powders and untreated powder are specified in Table 3.

TABLE 3

| | Layered Silicate | Organic Substance Used for Ion-Exchanging | Chemical Substance for Modification of A Crystal Side Face (A) |
|---|---|---|---|
| Treated Powder G | Swelling Mica | Distearyl Dimethyl Quaternary Ammonium | Sodium Alkylbenzenesulfonate |
| Treated Powder H | Swelling Mica | Distearyl Dimethyl Quaternary Ammonium | Sodium Oleate |
| Treated Powder I | Swelling Mica | Distearyl Dimethyl Quaternary Ammonium | Acryloyl-Containing Sulfonate Ester |

TABLE 3 (continued)

| | Layered Silicate | Organic Substance Used for Ion-Exchanging | Chemical Substance for Modification of A Crystal Side Face (A) |
|---|---|---|---|
| Treated Powder J | Swelling Mica | Distearyl Dimethyl Quaternary Ammonium | Ammonium Polyphosphate |
| Treated Powder K | Montmorillonite | Distearyl Dimethyl Quaternary Ammonium | Sodium Alkylbenzenesulfonate |
| Treated Powder L | Swelling Mica | - | Sodium Alkylbenzenesulfonate |
| Untreated Powder | Swelling Mica | Distearyl Dimethyl Quaternary Ammonium | - |

(PROCEDURE UTILIZED TO PREPARE TEST SAMPLES)

The procedure used to prepare test samples for Examples of the first invention was followed to prepare 2 mm or 100 μm thick plates.

In the case where a material is provided in a liquid form, a predetermined amount of the material was fed midway in the extruder using a plunger or gear pump. In the below-described Comparative Example 11, a plunger pump was used to feed a liquid-form peroxide (PERHEXA 25B). In the below-described Comparative Example 15, the untreated powder was introduced in an 9-fold weight of xylene. The following one hour of stirring resulted in formation of a slurry. This slurry was fed midway in the extruder using a gear pump and desolvated form a vent port attached to the extruder.

(TEST METHODS USED TO EVALUATE SAMPLES)

The flexural modulus and gas barrier property of each test sample were evaluated in the same manner as in Examples of the first invention.

<u>EXAMPLES 6 - 11 AND COMPARATIVE EXAMPLES 9 - 15</u>

The above-listed polyolefinic resins and treated powders were used to prepare samples of polyolefinic resin composite materials of the present invention according to the above-described sample preparation procedure. Physical properties of those resin composite materials were evaluated according to the above-described test methods. The formulation materials used in Examples and Comparative Examples, as well as physical property evaluation results of the samples, are listed in Table 4.

Table 4

| | Loaded Powder | Polyolefinic Resin | Flexural Modulus (Gpa) | Oxygen Transmittance ($cc/cm^2/day$) |
|---|---|---|---|---|
| Ex.6 | Treated Powder G | EA9 | 2.87 | 110 |
| Ex.7 | Treated Powder H | 99.9/0.1 Mixture of EA9/Perbutyl-D | 3.22 | 132 |
| Ex.8 | Treated Powder I | 99.9/0.1 Mixture of EA9/Perbutyl-D | 3.12 | 126 |
| Ex.9 | Treated Powder J | EA9 | 3.42 | 110 |
| Ex.10 | Treated Powder G | HB530 | 2.25 | - |
| Ex.11 | Treated Powder K | EA9 | 2.77 | 121 |
| Comp.Ex.9 | - | EA9 | 1.37 | 284 |
| Comp.Ex.10 | - | HB530 | 0.76 | - |
| Comp.Ex.11 | Untreated Powder | EA9 | 1.32 | 251 |
| Comp.Ex.12 | Treated Powder L | EA9 | 1.71 | 234 |
| Comp.Ex.13 | Untreated Powder | 80/20 Mixture of EA9/Umex 1001 | 2.32 | 263 |
| Comp.Ex.14 | Untreated Powder | 80/20 Mixture of EA9/Umex 1001 | 2.36 | 183 |
| Comp.Ex.15 | 1/9 Mixture of Untreated Powder/Xylene | EA9 | 1.42 | 210 |

In Comparative Examples 9 and 10, a polypropylene resin or a polyethylene resin was solely extruded to

prepare samples for subsequent evaluation of physical properties. The extrusion comprised solely of a polypropylene resin exhibited a flexural modulus of 1.37 Gpa and an oxygen permeability of 284 $cc/cm^2/day$. As indicated by Comparative Example 13, the use of a layered silicate organically treated with a cationic surfactant alone resulted in slight property improvements; a flexural modulus of 1.32 Gpa and an oxygen barrier property of 251 $cc/cm^2/day$. On the other hand, the use of a polyolfinic oligomer containing a functional group having a tendency to couple to hydrogen, as disclosed in Japanese Patent Laying-Open No. Hei 10-182892, resulted in improvements in physical properties of a polymer, as indicated by Comparative Example 7; a flexural modulus of 2.32 Gpa and an oxygen barrier property of 263 $cc/cm^2/day$.

In contrast, when the composition capable of chemical modification of a crystal side face (A) was used instead of using the polyolfinic oligomer containing a functional group of a tendency to couple to hydrogen, as illustrated by Examples 6 - 11, marked property improvements were observed, i.e., a flexural modulus was at least doubled and an oxygen barrier property was reduced to a half or less, compared to the case where a polypropylene resin was used alone. It was remarkable that excellent physical properties were observed for samples obtained in Examples 7 and 8 where a peroxide was used; 3.22 Gpa and 3.12 Gpa for flexural modulus and 132 $cc/cm^2/day$ and 126 $cc/cm^2/day$ for oxygen permeability. This is probably because dispersion of crystalline flakes of the layered silicate was further promoted by a chemical reaction of an unsaturated bond located at a terminal of the chemical composition that modifies the crystal side face (A) with a polypropylene backbone chain, which was effective in a manner similar to a model shown in Figure 2 to delaminate the crystalline flakes. As demonstrated by Example 10, the similar property improvements resulted in either case of montmorillonite and swelling mica.

As also indicated by Example 10, the present invention was effective even in the case where a polypropylene resin was replaced by other polyolefinic resin. Comparative Example 15 followed the method described in Japanese Patent Laying-Open No. Hei 9-183910. This method was contemplated to promote dispersion of crystalline flakes by previously impregnating an organic solvent in interlayer spaces of the layered silicate to thereby expand interlayer spacings. In fact, while a certain improvement in oxygen barrier property was observed, an improvement in flexural modulus was hardly achieved due to the difficulty to remove a residual solvent. The provision of a vent port in an extruder is not enough to accomplish complete removal of a solvent. In this sense, the technique is considered far from realistic from an industrial point of view.

(EXAMPLES OF THE THIRD AND FOURTH INVENTIONS)

EXAMPLE 12

(PROCEDURE UTILIZED TO PREPARE A TEST SAMPLE)

50 parts by weight of a plasticizer (triethylene glycol di-ethylbutyrate) and 7.5 parts by weight of organically-modified smectite (product name SAN, manufactured by Corp Chemical) were mixed in a planetary stirring machine for a period of 1 minute to provide a paste mixture. 57.5 parts by weight of the paste mixture such obtained and 100 parts by weight of polyvinyl butyral (butyralation degree of 65 mole %) were melt kneaded in a plastograph at a set temperature of 140 °C for a period of 5 minutes. The resulting sample was compressed by a heat press controlled at a temperature of 200 °C into a 0.5 mm thick sheet.

(TEST METHODS USED TO EVALUATE A SAMPLE)

(TENSILE STRENGTH AND ELONGATION AT BREAK)

Test pieces were cut out from the above-obtained 0.5 mm thick sheet. Measurement using a Tensilon tester was performed on these pieces according to a method specified in JIS K 7113.

(DISPERSIBILITY)

The SEM was utilized to make observation at arbitrary location and count the number of particles within a 100 μm x 100 μm square. The results are given in Table 5.

◎ : the number of 1 μm or larger particles ≦ 50

○: 50 < the number of 1 μm or larger particles ≦ 100

× : 100 < the number of 1 μm or larger particles

EXAMPLES 13 - 23

The sample compositions containing materials specified in Table 5 were prepared in the same manner as in Example 12 and subsequently evaluated. The results are also shown in Table 5.

COMPARATIVE EXAMPLE 16

(PROCEDURE UTILIZED TO PREPARE A TEST SAMPLE)

100 parts by weight of polyvinyl butyral (butyralation degree of 70 mole %, residual acetyl content of 12 mole %) and 50 parts by weight of a plasticizer (triethylene glycol di-ethylbutyrate) were melt kneaded in a plastograph at a set temperature of 140 °C for a period of 5 minutes. The resulting sample was compressed by a heat press controlled at a temperature of 200 °C into a 0.5 mm thick sheet. Using the sheet thus obtained, evaluation was carried out in the same manner as in Example 12. The results are given in Table 5.

COMPARATIVE EXAMPLE 17

The sample composition containing materials specified in Table 5 was prepared in the same manner as in Example 12 and subsequently evaluated. The results are also shown in Table 5.

Table 5

| | | Composition | | | | | | Dispersibility | Tensile Strength (MPa) | | | | Elongation at Break (%) |
|---|---|---|---|---|---|---|---|---|---|---|---|---|---|
| | | Resin | | Plasticizer | | Layered Silicate | | | Modulus 100% | Modulus 200% | Modulus 300% | Maximum Stress | |
| | | Type | Amount | Type | Amount | Type | Amount | | | | | | |
| Ex. | 12 | A | 100 | 3GH | 50 | c | 7.5 | ◎ | 10.0 | 25.0 | 47.0 | 261.0 | 802 |
| | 13 | A | 100 | 3GH | 50 | a | 7.5 | ◎ | 20.0 | 51.0 | 85.0 | 355.0 | 740 |
| | 14 | A | 100 | 3GH | 40 | c | 7.5 | ◎ | 39.0 | 90.0 | 148.0 | 320.0 | 550 |
| | 15 | A | 100 | 3GH | 60 | c | 7.5 | ◎ | 6.0 | 15.0 | 25.0 | 164.0 | 950 |
| | 16 | B | 100 | 3GH | 50 | c | 7.5 | ◎ | 6.0 | 10.5 | 16.4 | 80.6 | 1070 |
| | 17 | B | 100 | 3GH | 50 | a | 7.5 | ◎ | 10.8 | 22.7 | 35.2 | 61.7 | 545 |
| | 18 | B | 100 | 3GH | 50 | b | 7.5 | ◎ | 20.8 | 43.6 | 61.5 | 74.8 | 373 |
| | 19 | B | 100 | 3GO | 50 | c | 7.5 | ◎ | 7.2 | 14.5 | 24.6 | 172.0 | 1021 |
| | 20 | B | 100 | 3GH | 50 | a | 50 | ◎ | 103.0 | - | - | 156.0 | 154 |
| | 21 | B | 100 | 3GH | 20 | a | 7.5 | ◎ | 52.0 | 140.0 | - | 183.0 | 285 |
| | 22 | B | 100 | 3GH | 50 | b | 3.0 | ◎ | 9.0 | 17.2 | 25.2 | 55.8 | 620 |
| | 23 | B | 100 | 3GH | 50 | d | 7.5 | ○ | 5.1 | 8.3 | 11.9 | 76.6 | 1256 |
| Comp. Ex. | 16 | B | 100 | 3GH | 50 | - | - | - | 3.6 | 4.8 | 6.6 | 52.5 | 1194 |
| | 17 | B | 100 | 3GH | 50 | e | 7.5 | × | 4.0 | 5.6 | 7.5 | 54.0 | 1050 |

The abbreviations used in Table 5 represent the followings.

Type of Resin

A: polyvinyl butyral (butyralation degree of 65 mole %, polymerization degree of 1,700, and residual acetyl content of 0.5 mole %)

B: polyvinyl butyral (butyralation degree of 70 mole %, polymerization degree of 1,700, and residual acetyl content of 12 mole %)

Type of Layered Silicate

a: montmorillonite; organically-treated product (product name: CLOYCITE 20A) manufactured by Southern Clay Inc.

b: swelling mica; organically-treated product (product name: MAE-100) manufactured by Corp Chemical Co.

c: smectite; organically-treated product (product name: SAN) manufactured by Corp Chemical Co.

d: purified montmorillonite; product of Kunimine Co. (product name: KUNIPIA-G)

e: finely-divided talc; product of Shiraishi Calcium Co. (product name: Hi-Filler #5000)

Type of Plasticizer

3GH: triethylene glycol di-ethylbutyrate

3GO: triethylene glycol di-ethylhexoate

## EFFECTS OF THE INVENTION

The polyolefinic resin composite material in accordance with the first invention comprises 100 parts by weight of a polyolefinic resin and 0.1 - 50 parts by weight of an organically-modified layered silicate. The organically-modified layered silicate is derived via ion-exchange of metal ions originally present as an exchangeable cation in a crystal structure of a layered silicate with a cationic surfactant, and a hydroxyl group on a crystal face of the organically-modified layered silicate is chemically modified by a chemical substance containing at its molecular end a functional group having a tendency to chemically couple to the hydroxyl group or a chemical affinity for the hydroxyl group. Such a composition exhibits marked improvements in physical properties, such as elastic modulus and gas barrier properties of polyolefin.

The polyolefinic resin composite material in accordance with the second invention comprises 100 parts by weight of a polyolefinic resin and 0.1 - 50 parts by weight of an organically-modified layered silicate. The organically-modified layered silicate is derived via ion-exchange of metal ions originally present as an exchangeable cation in a crystal structure of a layered silicate with a cationic surfactant, and a hydroxyl group on a crystal face of the organically-modified layered silicate is chemically modified by an anionic surface active compound. Such a composition exhibits marked improvements in physical properties, such as elastic modulus and gas barrier properties of polyolefin.

The thermoplastic resin composite material of the third invention comprises a thermoplastic resin, a finely dispersed layered silicate and a plasticizer. Such a thermoplastic resin composition exhibits marked property improvements, e.g., improved mechanical strength, increased elastic modulus and reduced bleeding of the plasticizer. In particular, the composition secures a good balance between flexibility and strength, which was previously difficult to achieve.

## Claims

1. A polyolefinic resin composite material characterized as containing 100 parts by weight of a polyolefinic resin and 0.1 - 50 parts by weight of an organically-modified layered silicate;

   said organically-modified layered silicate being derived via ion-exchange of metal ions originally contained as exchangeable cations in a crystal structure of a layered silicate with a cationic surfactant, and a hydroxyl group present on a crystal side face of the organically-modified layered silicate being chemically modified by a chemical substance containing at its molecular end a functional group having a tendency to chemically couple to the hydroxyl group or a chemical affinity for the hydroxyl group.

2. The polyolefinic resin composite material as recited in claim 1, wherein said functional group having a tendency to chemically couple to the hydroxyl group or a chemical affinity for the hydroxyl group is at least one selected from the group consisting of alkoxy, alkoxysilyl, epoxy, carboxyl, hydroxyl, maleic anhydride, isocyanate and aldehyde groups.

3. The polyolefinic resin composite material as recited in claim 1 or 2, wherein said chemical substance contains 2 or more carbon atoms.

4. The polyolefinic resin composite material as recited in any one of claims 1 - 3, wherein said chemical substance

also contains at least one reactive functional group, other than the functional group located at its molecular end and having a tendency to chemically couple to the hydroxyl group or a chemical affinity for the hydroxyl group.

**5.** The polyolefinic resin composite material as recited in any one of claims 1 - 4, wherein said reactive functional group is at least one selected from the group consisting of vinyl, amino, epoxy and acryloyl groups.

**6.** The polyolefinic resin composite material as recited in any one of claims 1 - 5, wherein said chemical substance has a straight chain containing 12 or more carbon atoms.

**7.** The polyolefinic resin composite material as recited in any one of claims 1 - 6, **characterized in that** said layered silicate has an average interlayer spacing of 6 nm or greater, when detected by X-ray diffraction measurement.

**8.** The polyolefinic resin composite material as recited in any one of claims 1 - 7, **characterized in that** the number of layered silicate particles with a mean diameter of 1 μm or larger does not exceed 100 within a range of 100 μm square.

**9.** A polyolefinic resin composite material characterized as containing 100 parts by weight of a polyolefinic resin and 0.1 - 50 parts by weight of an organically-modified layered silicate;

said organically-modified layered silicate being derived via ion-exchange of metal ions originally contained as exchangeable cations in a crystal structure of a layered silicate with a cationic surfactant, and a crystal side face of the organically-modified layered silicate being chemically modified by an anionic surface active compound.

**10.** The polyolefinic resin composite material as recited in claim 9, wherein said anionic surface active compound is at least one surfactant selected from the group consisting of carboxylates, sulfonates, sulfate esters, phosphate esters and polyphosphates.

**11.** The polyolefinic resin composite material as recited in claim 9 or 10, wherein said anionic surface active compound also has at least one reactive functional group at a site, other than anionic sites in its molecular chain.

**12.** The polyolefinic resin composite material as recited in any one of claims 9 - 11, wherein said reactive functional group is at least one selected from the group consisting of vinyl, amino, acryloyl and epoxy groups.

**13.** The polyolefinic resin composite material as recited in any one of claims 9 - 12, wherein said anionic surface active compound has a long chaing containing 12 or more carbon atoms.

**14.** The polyolefinic resin composite material as recited in any one of claims 9 - 13, **characterized in that** said layered silicate has an average interlayer spacing of 6 nm or greater, when detected by X-ray diffraction measurement.

**15.** The polyolefinic resin composite material as recited in any one of claims 9 - 14, **characterized in that** the number of layered silicate particles with a mean diameter of 1 μm or larger does not exceed 100 within a range of 100 μm square.

**16.** A thermoplastic resin composite material characterized as containing a thermoplastic resin, a finely-dispersed layered silicate and a plasticizer.

**17.** The thermoplastic resin composite material as recited in claim 16, characterized as containing 100 parts by weight of the thermoplastic resin, 0.1 - 100 parts by weight of the layered silicate and 2 - 300 parts by weight of the plasticizer.

**18.** The thermoplastic resin composite material as recited in claim 17, wherein said layered silicate is an organically-modified layered silicate.

**19.** The thermoplastic resin composite material as recited in any one of claims 16 - 18, wherein said thermoplastic resin is a polyvinyl buryral resin.

**20.** The thermoplastic resin composite material as recited in any one of claims 16 - 19, **characterized in that** said layered silicate has an average interlayer spacing of 6 nm or greater, when detected by X-ray diffraction measurement.

**21.** The thermoplastic resin composite material as recited in any one of claims 16 - 20, **characterized in that** the number of layered silicate particles with a mean diameter of 1 μm or larger does not exceed 100 within a range of 100 μm square.

**22.** A process for production of a thermoplastic resin composite material including the steps of mixing a layered silicate with a plasticizer to form a mixture and mixing the mixture with a thermoplastic resin.

**23.** The process for production of a thermoplastic resin composite material as recited in claim 22, wherein an organically-modified layered silicate is used for the layered silicate.

**24.** The process for production of a thermoplastic resin composite material as recited in claim 22 or 23, wherein 0.1 - 100 parts by weight of the layered silicate and 2 - 300 parts by weight of the plasticizer are loaded, based on 100 parts by weight of the thermoplastic resin.

FIG. 1

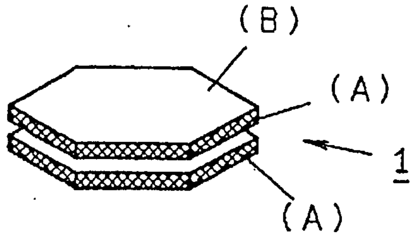


FIG. 2

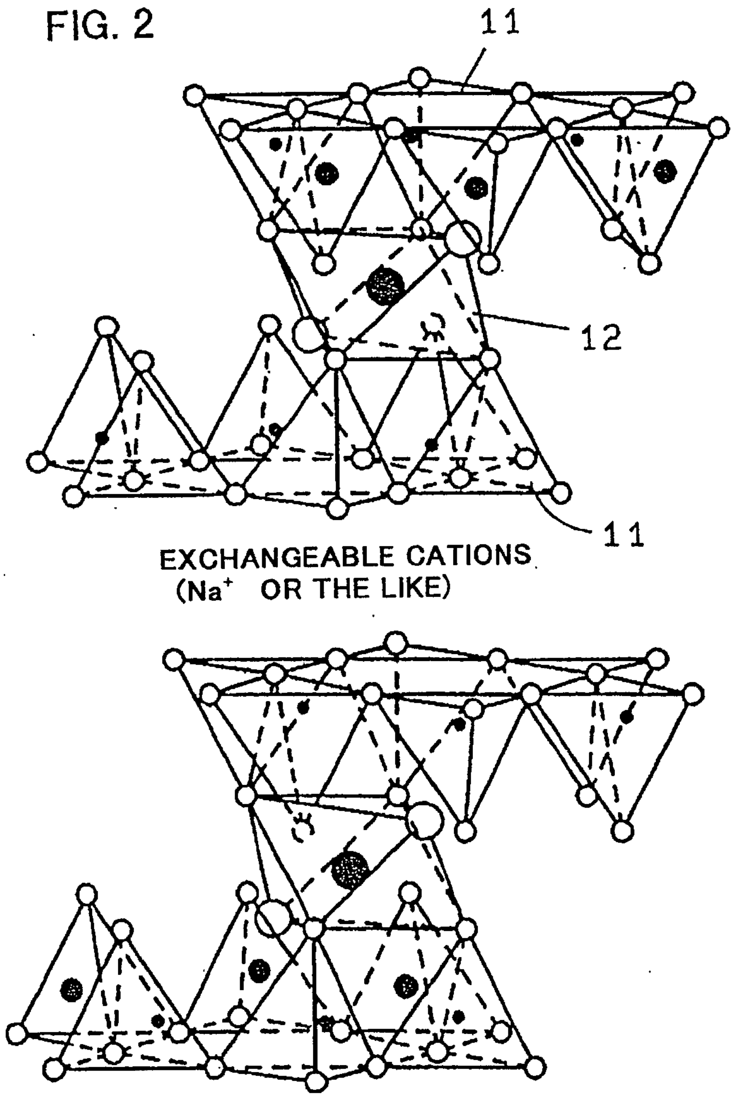


○ : OXYGEN ◯ : HYDROXYL GROUP

● : Al, Fe, Mg OR THE LIKE

• AND ● : SILICONE, ALUMINUM OR THE LIKE

FIG. 3

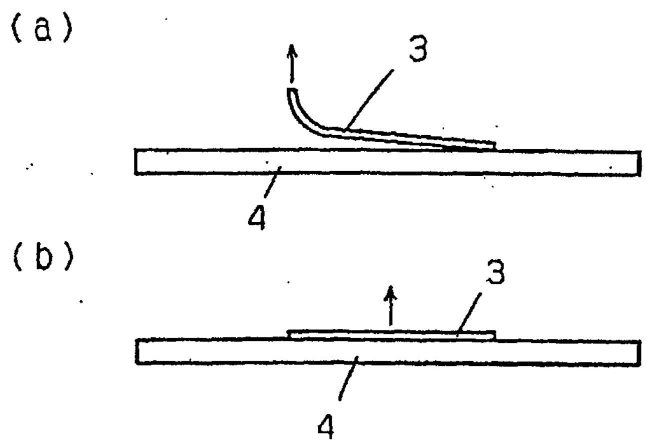


FIG. 4

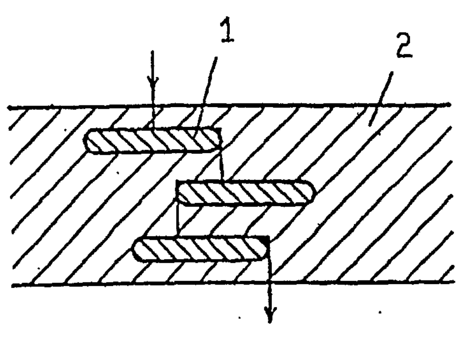

## INTERNATIONAL SEARCH REPORT

International application No.
PCT/JP00/02337

A. CLASSIFICATION OF SUBJECT MATTER
Int.Cl$^7$ C08L23/00, C08L101/00, C08K9/04, C08J3/20

According to International Patent Classification (IPC) or to both national classification and IPC

B. FIELDS SEARCHED

Minimum documentation searched (classification system followed by classification symbols)
Int.Cl$^7$ C08L23/00, C08L101/00, C08K9/04, C08J3/20

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP, 10-298358, A (Mitsui Chemicals, Ltd.), 10 November, 1998 (10.11.98), Full specification (Family: none) | 1-24 |
| A | JP, 9-183910, A (Mitsubishi Chemical Corporation), 15 July, 1997 (15.07.97), Full specification & EP, 771854, A & US, 5747575, A | 1-14 |
| A | JP, 10-330537, A (Kao Corporation), 15 December, 1998 (15.12.98), Full specification (Family: none) | 1-24 |
| A | JP, 9-118792, A (Mitsubishi Chemical Corporation), 06 May, 1997 (06.05.97), Full specification (Family: none) | 1-24 |
| A | JP, 9-124836, A (Mitsubishi Chemical Corporation), 13 May, 1997 (13.05.97), Full specification (Family: none) | 1-24 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
04 July, 2000 (04.07.00)

Date of mailing of the international search report
18 July, 2000 (18.07.00)

Name and mailing address of the ISA/
Japanese Patent Office

Facsimile No.

Authorized officer

Telephone No.

Form PCT/ISA/210 (second sheet) (July 1992)

**INTERNATIONAL SEARCH REPORT**

International application No.
PCT/JP00/02337

C (Continuation). DOCUMENTS CONSIDERED TO BE RELEVANT

| Category* | Citation of document, with indication, where appropriate, of the relevant passages | Relevant to claim No. |
|---|---|---|
| A | JP, 10-130434, A (Du Pont K.K., Kunimine Ind. Co. Ltd.), 19 May, 1998 (19.05.98), Full specification (Family: none) | 1-24 |
| A | JP, 10-30039, A (SHOWA DENKO K.K.), 03 February, 1998 (03.02.98), Full specification & EP, 807659, A1 & EP, 807659, B1 & US, 5939184, A | 1-24 |
| A | JP, 9-309720, A (Kao Corporation), 02 December, 1997 (02.12.97), Full specification & EP, 787767, A1 & US, 5879589, A | 1-24 |
| A | WO, 93/11190, A1 (MAXFIELD, MscRae), 10 June, 1993 (10.06.93), Full specification (Family: none) | 1-24 |

Form PCT/ISA/210 (continuation of second sheet) (July 1992)